# EUROPEAN PATENT APPLICATION

(11) **EP 4 436 118 A1**
(43) Date of publication of application: **25.09.2024**
(21) Application number: 22966011.3
(22) Date of filing: 28.12.2022
(51) Int. Cl.: H04L 27/00

(54) **MESSAGE PROCESSING METHOD AND APPARATUS, AND NETWORK DEVICE AND MEDIUM**

(71) Applicant: New H3C Technologies Co., Ltd., Hangzhou, Zhejiang 310052 (CN)
(72) Inventor: WANG, Wei, Beijing 100102 (CN)
(74) Representative: Zimmermann & Partner Patentanwälte mbB
(86) International application number: PCT/CN2022/142738
(87) International publication number: WO 2024/138414

(57) **Abstract**

The present disclosure provides a packet processing method, apparatus, network device and medium, and relates to the technical field of network communication. The method comprises: receiving a plurality of service packets of a specified service sent by a user-side device; caching the plurality of service packets by using reserved bandwidth resources of the specified service in a first scheduling queue, wherein the first scheduling queue is a scheduling queue for a deterministic flow; if the reserved bandwidth resources are insufficient to cache the plurality of service packets, caching service packets that have not been cached in the plurality of service packets by using spare bandwidth resources of the specified service in the first scheduling queue; forwarding service packets in the first scheduling queue to a second network device according to a scheduling cycle of the first scheduling queue. The packet loss rate in the case of micro-burst can be reduced.

## Description

### Technical field

The present application relates to the technical field of network communication, in particular to a packet processing method, apparatus, network device and medium.

### Background

With the development of industrial internet and meta-universe, remote interactive services has put forward stricter requirements for network delay, jitter and packet loss, and a deterministic network technology has become a WAN solution to meet the above requirements. A deterministic network refers to a network that provides deterministic service guarantee capability for carried services, which can guarantee a deterministic delay, delay jitter, packet loss rate and other indicators of the services. The deterministic network technology is a new Quality of Service (QoS) guarantee technology.

At present, the deterministic network may be realized based on Cyclic Specific Queuing and Forwarding (CSQF) mechanism. Software Defined Network (SDN) controller may plan a forwarding path of a service packet in the deterministic network and specify CSQF forwarding resources of each hop network device in the deterministic network, so that the network device forwards service packets according to the specified CSQF forwarding resources.

The in-interface rate of the network device is usually higher than an average rate of a service. It may occur that the instantaneous rate of the service is much higher than the average rate, that is, a large number of service packets of this service are received instantaneously, which can be called "micro-burst". Since the CSQF forwarding resources of each hop network device in the deterministic network are scheduled according to the average rate of service, the CSQF forwarding resources allocated for this service are insufficient to forward a large number of service packets received instantaneously when the "micro-burst" occurs, which will lead to an increase in packet loss rate.

### Summary

The purpose of examples of the present disclosure is to provide a packet processing method, apparatus, network device and medium, so as to reduce the packet loss rate in the case of micro-burst. The specific technical solution is as follows:
In the first aspect, an example of the present disclosure provides a packet processing method, which is applied to a first network device, the method including: receiving a plurality of service packets of a specified service sent by a user-side device; caching the plurality of service packets by using reserved bandwidth resources of the specified service in a first scheduling queue, wherein the first scheduling queue is a scheduling queue for a deterministic flow; if the reserved bandwidth resources are insufficient to cache the plurality of service packets, caching service packets that have not been cached in the plurality of service packets by using spare bandwidth resources of the specified service in the first scheduling queue; forwarding service packets in the first scheduling queue to a second network device according to a scheduling cycle of the first scheduling queue.

In a possible implementation, after caching the service packets that have not been cached in the plurality of service packets by using the spare bandwidth resources of the specified service in the first scheduling queue, the method further includes: if there are still service packets that have not been cached in the plurality of service packets, caching the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continuing to cache the service packets that have not been cached in the plurality of service packets by using spare bandwidth resources of the specified service in the second scheduling queue; forwarding service packets in the second scheduling queue to the second network device according to the scheduling cycle of the second scheduling queue.

In a possible implementation, after caching the plurality of service packets by using the reserved bandwidth resources of the specified service in the first scheduling queue, the method further includes: if the plurality of service packets have been cached, releasing the spare bandwidth resources of the specified service in the first scheduling queue; after caching the service packets that have not been cached in the plurality of service packets by using the reserved bandwidth resources of the specified service in the second scheduling queue, the method further includes: if the plurality of service packets have been cached, releasing the spare bandwidth resources of the specified service in the second scheduling queue.

In a possible implementation, after caching the service packets that have not been cached in the plurality of service packets by using the spare bandwidth resources of the specified service in the first scheduling queue, the method further includes: if there are still service packets that have not been cached in the plurality of service packets, caching the service packets that have not been cached in the plurality of service packets by using reserved bandwidth resources and spare bandwidth resources released by other services in the first scheduling queue.

In a possible implementation, after caching the service packets that have not been cached in the plurality of service packets by using the reserved bandwidth resources and spare bandwidth resources released by other services in the first scheduling queue, the method further includes: if there are still service packets that have not been cached in the plurality of service packets, caching the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continuing to cache the service packets that have not been cached in the plurality of service packets by using spare bandwidth resources of the specified service in the second scheduling queue; if there are still service packets that have not been cached in the plurality of service packets, caching the service packets that have not been cached in the plurality of service packets by using reserved bandwidth resources and spare bandwidth resources released by other services in the second scheduling queue; forwarding service packets in the second scheduling queue to the second network device according to the scheduling cycle of the second scheduling queue.

In a possible implementation, before caching the service packets that have not been cached in the plurality of service packets by using the reserved bandwidth resources of the specified service in the second scheduling queue, the method further includes: if there are still service packets that have not been cached in the plurality of service packets, caching the service packets that have not been cached in the plurality of service packets by occupying bandwidth resources in a third scheduling queue, wherein the third scheduling queue is a scheduling queue for a non-deterministic flow, and a scheduling cycle of the third scheduling queue is the same as that of the first scheduling queue; forwarding service packets in the third scheduling queue to the second network device according to the scheduling cycle of the third scheduling queue; after caching the service packets that have not been cached in the plurality of service packets by using the reserved bandwidth resources and spare bandwidth resources released by other services in the second scheduling queue, the method further includes: if there are still service packets that have not been cached in the plurality of service packets, caching the service packets that have not been cached in the plurality of service packets by occupying bandwidth resources in a fourth scheduling queue, wherein the fourth scheduling queue is a scheduling queue for a non-deterministic flow, and a scheduling cycle of the fourth scheduling queue is the same as that of the second scheduling queue; forwarding service packets in the fourth scheduling queue to the second network device according to the scheduling cycle of the fourth scheduling queue.

In a possible implementation, bandwidth resources of the first scheduling queue account for less than or equal to 50% of total bandwidth resources, and bandwidth resources of the second scheduling queue account for less than or equal to 50% of the total bandwidth resources.

In the second aspect, an example of the present disclosure provides a packet processing apparatus, which is applied to a first network device, the apparatus including: a receiving module to receive a plurality of service packets of a specified service sent by a user-side device; a caching module cache the plurality of service packets by using reserved bandwidth resources of the specified service in a first scheduling queue, wherein the first scheduling queue is a scheduling queue for a deterministic flow; the caching module is further to cache service packets that have not been cached in the plurality of service packets by using spare bandwidth resources of the specified service in the first scheduling queue if the reserved bandwidth resources are insufficient to cache the plurality of service packets; a forwarding module to forward service packets in the first scheduling queue to a second network device according to a scheduling cycle of the first scheduling queue.

In a possible implementation, the caching module is further to: after caching service packets that have not been cached in the plurality of service packets by using the spare bandwidth resources of the specified service in the first scheduling queue, cache, if there are still service packets that have not been cached in the plurality of service packets, the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continue to cache the service packets that have not been cached in the plurality of service packets by using spare bandwidth resources of the specified service in the second scheduling queue; the forwarding module is further to forward service packets in the second scheduling queue to the second network device according to the scheduling cycle of the second scheduling queue.

In a possible implementation, the caching module is further to, after caching the plurality of service packets by using the reserved bandwidth resources of the specified service in the first scheduling queue, release, if the plurality of service packets have been cached, the spare bandwidth resources of the specified service in the first scheduling queue; the caching module is further to, after caching the service packets that have not been cached in the plurality of service packets by using the reserved bandwidth resources of the specified service in the second scheduling queue, release, if the plurality of service packets have been cached, the spare bandwidth resources of the specified service in the second scheduling queue.

In a possible implementation, the caching module is further to, after caching service packets that have not been cached in the plurality of service packets by using the spare bandwidth resources of the specified service in the first scheduling queue, cache, if there are still service packets that have not been cached in the plurality of service packets, the service packets that have not been cached in the plurality of service packets by using reserved bandwidth resources and spare bandwidth resources released by other services in the first scheduling queue.

In a possible implementation, the caching module is further to, after caching the service packets that have not been cached in the plurality of service packets by using the reserved bandwidth resources and spare bandwidth resources released by other services in the first scheduling queue, cache, if there are still service packets that have not been cached in the plurality of service packets, the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continue to cache the service packets that have not been cached in the plurality of service packets by using spare bandwidth resources of the specified service in the second scheduling queue; if there are still service packets that have not been cached in the plurality of service packets, cache the service packets that have not been cached in the plurality of service packets by using reserved bandwidth resources and spare bandwidth resources released by other services in the second scheduling queue; the forwarding module is further to forward service packets in the second scheduling queue to the second network device according to the scheduling cycle of the second scheduling queue.

In a possible implementation, the caching module is further to before caching the service packets that have not been cached in the plurality of service packets by using the reserved bandwidth resources of the specified service in the second scheduling queue, cache, if there are still service packets that have not been cached in the plurality of service packets, the service packets that have not been cached in the plurality of service packets by occupying bandwidth resources in a third scheduling queue, wherein the third scheduling queue is a scheduling queue for a non-deterministic flow, and a scheduling cycle of the third scheduling queue is the same as that of the first scheduling queue; the forwarding module is further to forward service packets in the third scheduling queue to the second network device according to the scheduling cycle of the third scheduling queue; the caching module is further to, after caching the service packets that have not been cached in the plurality of service packets by using the reserved bandwidth resources and spare bandwidth resources released by other services in the second scheduling queue, cache, if there are still service packets that have not been cached in the plurality of service packets, the service packets that have not been cached in the plurality of service packets by occupying bandwidth resources in a fourth scheduling queue, wherein the fourth scheduling queue is a scheduling queue for a non-deterministic flow, and a scheduling cycle of the fourth scheduling queue is the same as that of the second scheduling queue; the forwarding module is further to forward service packets in the fourth scheduling queue to the second network device according to the scheduling cycle of the fourth scheduling queue.

In a possible implementation, bandwidth resources of the first scheduling queue account for less than or equal to 50% of total bandwidth resources, and bandwidth resources of the second scheduling queue account for less than or equal to 50% of the total bandwidth resources.

In a third aspect, an example of the present disclosure provides a network device including: a processor; a transceiver; a machine-readable storage medium having machine-executable instructions stored therein that can be executed by the processor; the machine-executable instructions cause the processor to: receive a plurality of service packets of a specified service sent by a user-side device; cache the plurality of service packets by using reserved bandwidth resources of the specified service in a first scheduling queue, wherein the first scheduling queue is a scheduling queue for a deterministic flow; if the reserved bandwidth resources are insufficient to cache the plurality of service packets, cache service packets that have not been cached in the plurality of service packets by using spare bandwidth resources of the specified service in the first scheduling queue; forwarding, by the transceiver, service packets in the first scheduling queue to a second network device according to a scheduling cycle of the first scheduling queue.

In a possible implementation, the machine-executable instructions further cause the processor to: after caching service packets that have not been cached in the plurality of service packets by using the spare bandwidth resources of the specified service in the first scheduling queue, cache, if there are still service packets that have not been cached in the plurality of service packets, the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continue to cache the service packets that have not been cached in the plurality of service packets by using spare bandwidth resources of the specified service in the second scheduling queue; forward, by the transceiver, service packets in the second scheduling queue to the second network device according to the scheduling cycle of the second scheduling queue.

In a possible implementation, the machine-executable instructions further cause the processor to: after caching the plurality of service packets by using the reserved bandwidth resources of the specified service in the first scheduling queue, release, if the plurality of service packets have been cached, the spare bandwidth resources of the specified service in the first scheduling queue; after caching the service packets that have not been cached in the plurality of service packets by using the reserved bandwidth resources of the specified service in the second scheduling queue, release, if the plurality of service packets have been cached, the spare bandwidth resources of the specified service in the second scheduling queue.

In a possible implementation, the machine-executable instructions further cause the processor to: after caching the service packets that have not been cached in the plurality of service packets by using the spare bandwidth resources of the specified service in the first scheduling queue, cache, if there are still service packets that have not been cached in the plurality of service packets, the service packets that have not been cached in the plurality of service packets by using reserved bandwidth resources and spare bandwidth resources released by other services in the first scheduling queue.

In a possible implementation, the machine-executable instructions further cause the processor to: after caching the service packets that have not been cached in the plurality of service packets by using the reserved bandwidth resources and spare bandwidth resources released by other services in the first scheduling queue, cache, if there are still service packets that have not been cached in the plurality of service packets, the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continue to cache the service packets that have not been cached in the plurality of service packets by using spare bandwidth resources of the specified service in the second scheduling queue; if there are still service packets that have not been cached in the plurality of service packets, cache the service packets that have not been cached in the plurality of service packets by using reserved bandwidth resources and spare bandwidth resources released by other services in the second scheduling queue; forward, by the transceiver, service packets in the second scheduling queue to the second network device according to the scheduling cycle of the second scheduling queue.

In a possible implementation, the machine-executable instructions further cause the processor to: before caching the service packets that have not been cached in the plurality of service packets by using the reserved bandwidth resources of the specified service in the second scheduling queue, cache, if there are still service packets that have not been cached in the plurality of service packets, the service packets that have not been cached in the plurality of service packets by occupying bandwidth resources in a third scheduling queue, wherein the third scheduling queue is a scheduling queue for a non-deterministic flow, and a scheduling cycle of the third scheduling queue is the same as that of the first scheduling queue; forward, by the transceiver, service packets in the third scheduling queue to the second network device according to the scheduling cycle of the third scheduling queue; after caching the service packets that have not been cached in the plurality of service packets by using the reserved bandwidth resources and spare bandwidth resources released by other services in the second scheduling queue, cache, if there are still service packets that have not been cached in the plurality of service packets, the service packets that have not been cached in the plurality of service packets by occupying bandwidth resources in a fourth scheduling queue, wherein the fourth scheduling queue is a scheduling queue for a non-deterministic flow, and a scheduling cycle of the fourth scheduling queue is the same as that of the second scheduling queue; forward, by the transceiver, service packets in the fourth scheduling queue to the second network device according to the scheduling cycle of the fourth scheduling queue.

In a possible implementation, bandwidth resources of the first scheduling queue account for less than or equal to 50% of total bandwidth resources, and bandwidth resources of the second scheduling queue account for less than or equal to 50% of the total bandwidth resources.

In the fourth aspect, an example of the present disclosure provides a machine-readable storage medium having stored therein machine-executable instructions which, when called and executed by a processor, cause the processor to carry out the method described in the first aspect.

In the fifth aspect, an example of the present disclosure provides a computer program product, which causes the processor to carry out the method described in the first aspect.

By adopting the above technical solutions, after receiving a plurality of service packets of the specified service, if the reserved bandwidth resources of the specified service in the first scheduling queue are insufficient to cache the plurality of service packets, service packets that have not been cached can be cached by using spare bandwidth resources of the specified service in the first scheduling queue, and service packets in the first scheduling queue can be forwarded to a second network device in the scheduling cycle of the first scheduling queue. Compared with caching service packets only by using reserved bandwidth resources, the specified service in examples of the present disclosure is additionally provided with spare bandwidth resources, so that the first network device can forward more service packets in the case of micro-burst, which can reduce packet loss caused by the micro-burst.

### Brief Description of the Drawings

The accompanying drawings described here are used to provide a further understanding of the present disclosure and constitute a part of the present disclosure. The illustrative examples of the present disclosure and the descriptions thereof are used to explain the present disclosure and do not constitute undue limitations on the present disclosure.
Fig. 1 is a schematic diagram of a forwarding mechanism of a deterministic flow provided by an example of the present disclosure;
Fig. 2 is a schematic diagram of a network architecture of a deterministic network provided by an example of the present disclosure;
Fig. 3 is a flowchart of a packet processing method provided by an example of the present disclosure;
Fig. 4 is an exemplary schematic diagram of a forwarding resource allocation provided by an example of the present disclosure;
Fig. 5 is an exemplary schematic diagram of another forwarding resource allocation provided by an example of the present disclosure;
Fig. 6 is a flowchart of another packet processing method provided by an example of the present disclosure;
Fig. 7 is an exemplary schematic diagram of a forwarding resource occupation provided by an example of the present disclosure;
Fig. 8 is a flowchart of another packet processing method provided by an example of the present disclosure;
Fig. 9 is a schematic structure diagram of a packet processing apparatus provided by an example of the present disclosure;
Fig. 10 is a schematic structure diagram of a network device provided by an example of the present disclosure.

### Detailed Description

In order to make the purpose, technical solutions and advantages of the present disclosure clearer, the present disclosure will be further described in detail with reference to the accompanying drawings and examples. Obviously, the described examples are only a part and not all of the examples of the present disclosure. Based on the examples in the present disclosure, all other examples obtained by ordinary skilled in the art without creative efforts fall within the scope of protection of the present disclosure. In order to facilitate understanding, the relevant concepts involved in the examples of the present disclosure will be described first.

Each network device in the deterministic network divides each cycle T into a plurality of continuous small cycles with the same duration. For example, T is divided into four small cycles, namely, Cycle 0, Cycle 1, Cycle2 and Cycle3, and a certain deterministic flow are only forwarded within the specified small cycle. For example, deterministic flow 0 is forwarded within Cycle 0 in each cycle T, deterministic flow 1 is forwarded within Cycle 1 in each cycle T, deterministic flow 2 is forwarded within Cycle 2 in each cycle T, and deterministic flow 3 is forwarded within Cycle 3 in each cycle T. In this way, the delay jitter of network device can be limited within a time slice with a width of T, so as to achieve a bounded delay jitter. The jitter of each network device on a forwarding path of deterministic flow will not increase the delay jitter of a next network device of this network device on the forwarding path, that is, the delay jitter is independent of the number of network device included in the forwarding path. However, the increase in the number of network device will increase the total delay of a service packet on the forwarding path.

The above cycle T is a slot width of a scheduling queue of a predefined deterministic flow, and the delay jitter of the whole forwarding path ranges from 0 to 2T, for example, T=10us, and the delay jitter is 20us in the worst case, regardless of a length of the forwarding path and the number of network device.

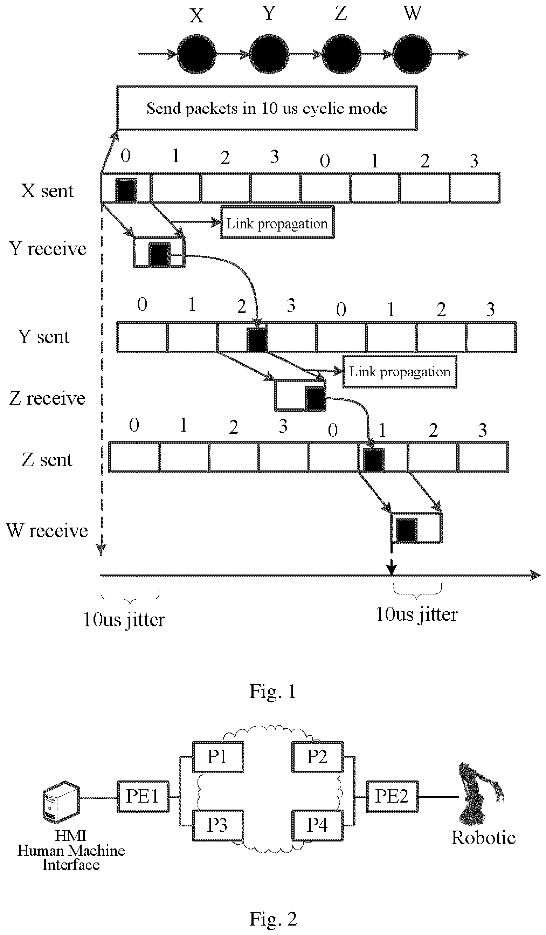

As shown in Fig. 1, assume that X, Y, Z and W are four consecutive network devices in the forwarding path. The cyclic forwarding cycle T of each network device consists of four small cycles, i.e., 0, 1, 2 and 3, and the duration of each small cycle is 10us. After receiving a service packet, each network device sends the service packet within a preset cycle corresponding to a deterministic flow to which the service packet belongs, that is, a mapping relationship between the deterministic flow and the cycle is pre-configured in each network device.

For example, device X sends a service packet within Cycle 0, which is transmitted in a link between device X and device Y After receiving the service packet, device Y sends the service packet within Cycle 2, and then the service packet is transmitted in a link between device Y and device Z. After receiving the service packet, device Z sends the service packet within its own Cycle 1, and then the service packet is transmitted in a link between device Z and device W, and device W can receive the service packet.

In the above process, constrained by the stable cyclic mapping relationship, once a sending cycle of the service packet in X is determined, a receiving cycle of the service packet in W can also be determined, and the delay jitter of each transmission of the service packet of deterministic flow from X to W can be controlled within 10us. It should be noted that clocks may be synchronized among network devices in the deterministic network, and Fig. 1 exemplarily shows the case that clocks are slightly different among the network devices.

As shown in Fig. 2, Fig. 2 is a schematic diagram of a network architecture of a deterministic network. Taking a deterministic network between Human Machine Interface (HMI) and robotic as an example, the deterministic network includes Provider Edge (PE) devices and P devices, and the P (Provider) device refers to core device on the network side. Both HMI and robotic in Fig. 2 are user-side devices. PE1, PE2 and P1 to P4 are exemplarily shown in Fig. 2, but the number of devices in actual implementation is not limited to this. The PE device is used to realize the forwarding of a service packet between the user-side device and the network-side device in the deterministic network.

SDN controller may plan a SRv6 forwarding path of a service packet entering the deterministic network from the user-side device for the PE device in advance, and plan forwarding resources for each hop network device in the forwarding path, so that each network device can forward the service packet of the deterministic flow according to the specified resources. The service packet entering the deterministic network from the user-side device refers to a service packet with deterministic service requirements encapsulated through Ethernet and sent by the user-side device, that is, a service packet of the deterministic flow.

The deterministic flow belongs to delay-sensitive service traffic, and non-deterministic flow is non-delay sensitive service traffic. For example, the non-deterministic flow can be a flow suitable for Best Effort forwarding policy.

The PE device has a user-side interface dedicated to the deterministic flow, which is not mixed with the non-deterministic flow. If the user-side interface needs to be used by a mixture of deterministic and non-deterministic flows, the deterministic and non-deterministic flows can be distinguished by Time Sensitive Network (TSN) technology. After the PE device receives the service packet sent by the user-side device through the user-side interface, the PE device forwards the service packet to the next network device through a network-side interface according to the SRv6 forwarding path planned by SDN and the specified scheduling cycle, so that the service packet can be transmitted in the deterministic network.

A SRv6 packet encapsulated by Ethernet with time synchronization mechanism is transmitted in the deterministic network. That is to say, after receiving the service packet sent by the user-side device, the PE device will encapsulate the service packet as the SRv6 packet, and the time of all network devices in the deterministic network is synchronized. The mechanism of time synchronization among network-side devices can use the Precision Time Protocol (PTP), out-of-band time synchronization network or synchronous Ethernet technology, etc..

The network-side interface of the PE device can also receive SRv6 packets forwarded by the P device, and transmit the received SRv6 packets to a destination user-side interface according to the SRv6 forwarding path, and send the service packets to the user-side device at the user-side interface according to the first-come-first-out scheduling mechanism. The P device is mainly responsible for forwarding service packets between the network-side device and the network-side device, and an in-interface of the P device forwards the service packets according to the SRv6 forwarding path of the received service packets by using a pre-specified scheduling cycle.

At present, the access rate of deterministic services can be 100Mbps, 1Gbps, 10Gbps and 100Gbps, and the in-interface rate of network-side device can be FE, GbE, 10GbE, 100GbE and 400GbE. The access rate of deterministic services is an average rate at which the transmission of service packets of the deterministic services is allowed.

It can be seen that the in-interface rate of network-side device is much higher than the average rate of deterministic services. It may occur that the average rate of a certain deterministic service is 100Mbps, 1Gbps, 10Gbps or 100Gbps, but the instantaneous rate of the deterministic service exceeds the average rate, that is, "micro-burst" occurs. In the case of "micro-burst", how to deal with multiple service packets received instantaneously and how to minimize packet loss are urgent problems to be solved.

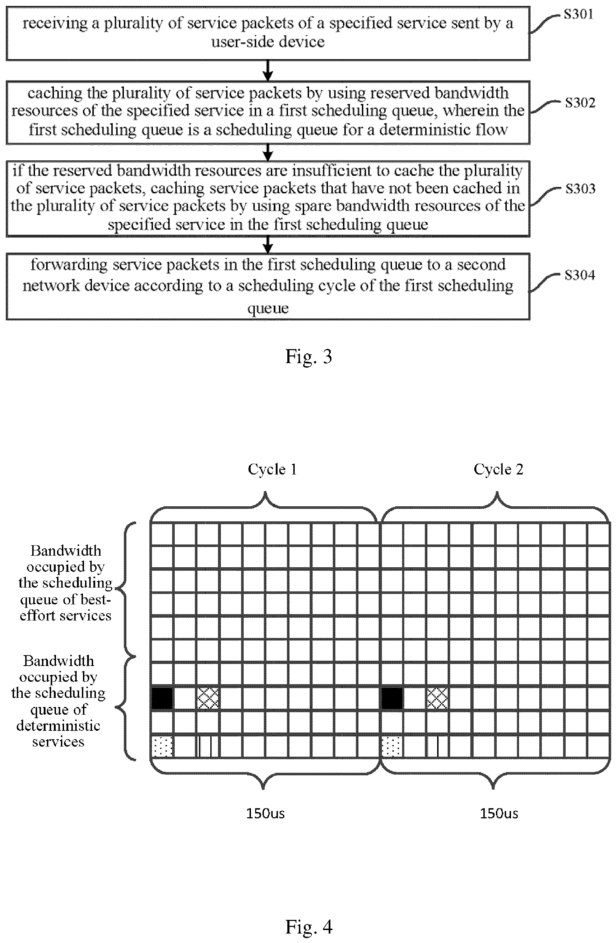

In order to deal with the "micro-burst" situation, an example of the present disclosure provides a packet processing method, which is applied to a first network device, wherein the first network device can be the PE device in a deterministic network. As shown in Fig. 3, the method includes:
S301: receiving a plurality of service packets of a specified service sent by a user-side device. The specified service is a deterministic service, and the first network device can continuously receive service packets in a deterministic flow corresponding to the specified service.
S302: caching the plurality of service packets by using reserved bandwidth resources of the specified service in a first scheduling queue, wherein the first scheduling queue is a scheduling queue for a deterministic flow. The first scheduling queue includes reserved bandwidth resources of various deterministic services, and reserved bandwidth resources of each deterministic service are configured in advance.

For example, as shown in Fig. 4, forwarding resources of two scheduling cycles are shown in Fig. 4, and a length of each scheduling cycle is 150 us. The horizontal direction in Fig. 4 represents time slot resources, a length of each grid represents one time slot. The vertical direction in Fig. 4 represents bandwidth resources, a height of each grid represents a minimum bandwidth that can be scheduled by the deterministic network. For example, the height of each grid represents 100 Mbps bandwidth. These bandwidth resources are allocated to scheduling queues of deterministic services and scheduling queues of best effort services respectively.

Each deterministic service can occupy a fixed time slot in one cycle. In Fig. 4, there are four filled grids in cycle 1, which respectively represent forwarding resources allocated for four deterministic services in cycle 1, and there are four filled grids in cycle 2, which respectively represent forwarding resources allocated for four deterministic services in cycle 2. The forwarding resources include time slot resources and bandwidth resources.

Taking a grid in the lower left corner of Fig. 4 as an example, the grid represents that the time slot resource allocated for a deterministic service is a first time slot of cycle 1, and the reserved bandwidth resource allocated for the deterministic service is 100Mbps.

If the first network device receives the service packets of the deterministic service, the forwarding resources corresponding to the grid in the lower right corner of Fig. 4 can be occupied.

S303: if the reserved bandwidth resources are insufficient to cache the plurality of service packets, caching service packets that have not been cached in the plurality of service packets by using spare bandwidth resources of the specified service in the first scheduling queue.

When the "micro-burst" occurs, a bandwidth of service packets that instantaneously arrive at the in-interface of the first network device will exceed a bandwidth corresponding to a time slot allocated for the specified service, that is, the reserved bandwidth resources corresponding to one grid in Fig. 4 are insufficient to cache a plurality of service packets arriving instantaneously. Therefore, spare bandwidth resources can be allocated for each deterministic service in advance, and when the reserved bandwidth resources are insufficient to cache a plurality of service packets, the spare bandwidth resources can be used to continue caching service packets.

Optionally, the reserved bandwidth resources and the spare bandwidth resources may be continuous bandwidth resources, and the resource amounts of the reserved bandwidth resources and the reserved bandwidth resources may be the same, or the resource amount of the spare bandwidth resources may be greater than that of the reserved bandwidth resources.

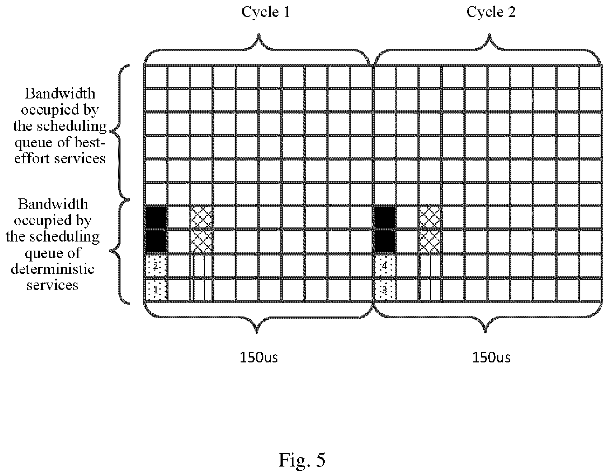

As an example, as shown in Fig. 5, spare bandwidth resources are additionally allocated for each deterministic service based on Fig. 4. For example, in Fig. 5, a grid marked with number 1 represents reserved bandwidth resources for the deterministic service in cycle 1, and a grid marked with number 2 represents spare bandwidth resources for the deterministic service in cycle 1. A grid marked with number 3 represents reserved bandwidth resources for the deterministic service in cycle 2, and a grid marked with number 4 represents spare bandwidth resources for the deterministic service in cycle 2.

If the reserved bandwidth resources corresponding to the grid marked with number 1 are insufficient to cache the received service packets of the deterministic service, the service packets of the deterministic service can be cached by using the reserved bandwidth resources corresponding to the grid marked with number 2.

S304: forwarding service packets in the first scheduling queue to a second network device according to a scheduling cycle of the first scheduling queue.

The second network device is a next hop device connected with the first network device in the deterministic network. For example, the forwarding path of the service packet in the deterministic network is PE1-P1-P2-PE2, then the first network device can be PE1 and the second network device can be P1.

According to an example of the present disclosure, after receiving a plurality of service packets of the specified service, if the reserved bandwidth resources of the specified service in the first scheduling queue are insufficient to cache the plurality of service packets, the service packets that have not been cached can also be cached by using the spare bandwidth resources of the specified service in the first scheduling queue, and the service packets in the first scheduling queue are forwarded to the second network device in the scheduling cycle of the first scheduling queue. Compared with caching service packets only by using reserved bandwidth resources, the specified service in the example of the present disclosure is additionally provided with spare bandwidth resources, which enables the first network device to forward more service packets in the case of micro-burst, thus reducing packet loss caused by the micro-burst.

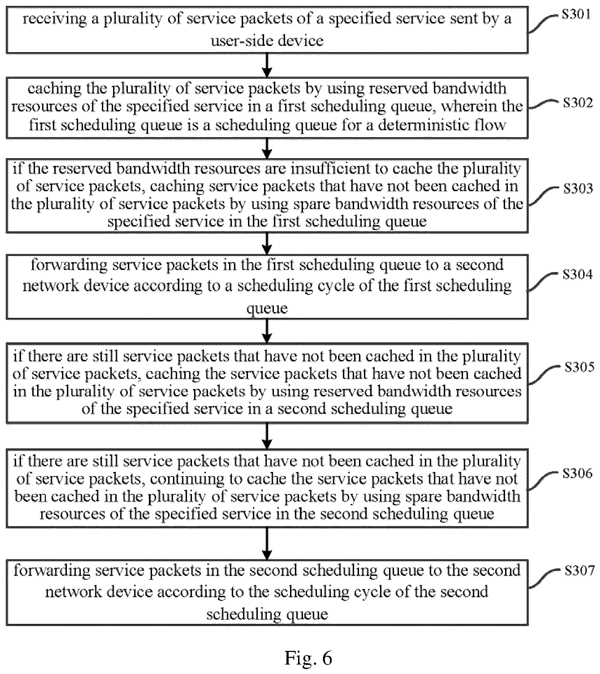

In order to further process service packets under micro-burst, as shown in Fig. 6, after S303-if the reserved bandwidth resources are insufficient to cache the plurality of service packets, caching the service packets that have not been cached in the plurality of service packets by using the spare bandwidth resources of the specified service in the first scheduling queue-the method further includes:
S305: if there are still service packets that have not been cached in the plurality of service packets, caching the service packets that have not been cached in the plurality of service packets by using reserved bandwidth resources of the specified service in a second scheduling queue.

The second scheduling queue is a scheduling queue for the deterministic flow, and scheduling cycles of the second scheduling queue and the first scheduling queue are continuous;

As an example, if the first scheduling queue is a scheduling queue of the deterministic flow in cycle 1 in Fig. 5, the second scheduling queue is a scheduling queue of the deterministic flow in cycle 2 in Fig. 5.

If both the reserved bandwidth resources numbered 1 and the reserved bandwidth resources numbered 2 in Fig. 5 are insufficient to cache the plurality of service packets of the specified service, the service packets that have not been cached can be cached by using reserved bandwidth resources numbered 3 in cycle 2.

S306: if there are still service packets that have not been cached in the plurality of service packets, continuing to cache the service packets that have not been cached in the plurality of service packets by using spare bandwidth resources of the specified service in the second scheduling queue. Still taking Fig. 5 as an example, if there are still service packets that have not been cached, the service packets that have not been cached can be cached by using reserved bandwidth resources numbered 4 in cycle 2.

It should be noted that the execution order among S304 and S305-S306 is not limited in examples of the present disclosure, S304 is executed according to the scheduling cycle of the first scheduling queue, and S305-S306 can be executed immediately after S303 without affecting each other.

S307: forwarding service packets in the second scheduling queue to the second network device according to the scheduling cycle of the second scheduling queue.

It can be understood that since the scheduling cycle of the second scheduling queue is later than that of the first scheduling queue, the first network device cannot forward service packets in the second scheduling queue to the second network device until service packets in the first scheduling queue are forwarded to the second network device.

According to examples of the present disclosure, in the case that reserved bandwidth resources and spare bandwidth resources of the specified service in the first scheduling queue are insufficient to cache a plurality of service packets of the specified service, the remaining service packets can be cached by further using reserved bandwidth resources and spare bandwidth resources of the specified service in the second scheduling queue, so as to forward service packets in the second scheduling queue in the scheduling cycle of the second scheduling queue. In this way, compared with the prior art, the problem of instantaneous micro-burst can be solved by using at least four times of bandwidth resources, which further improves the processing ability of service packets under the micro-burst, and reduces the packet loss rate.

On the basis of the above examples, if after S303-if the reserved bandwidth resources are insufficient to cache the plurality of service packets, caching service packets that have not been cached in the plurality of service packets by using spare bandwidth resources of the specified service in the first scheduling queue-all the plurality of service packets have been cached, spare bandwidth resources of the specified service in the first scheduling queue can be released.

Optionally, if after S305-if there are still service packets that have not been cached in the plurality of service packets, caching the service packets that have not been cached in the plurality of service packets by using reserved bandwidth resources of the specified service in a second scheduling queue-all the plurality of service packets have been cached, spare bandwidth resources of the specified service in the second scheduling queue can be released.

Since not all deterministic services produce the micro-burst at the same time, the micro-burst is an accidental event with a certain probability. In practical situations, the micro-burst may occur in some deterministic services, and spare bandwidth resources corresponding to the deterministic services thus need to be occupied. However, no micro-burst occurred in most deterministic services, and even some deterministic services may have no service packets to be transmitted in some cycles, so spare bandwidth resources planned for the deterministic services may not be occupied in some cycles, and even both reserved bandwidth resources and spare bandwidth resources planned for the deterministic services are not occupied in some cycles. The unoccupied bandwidth resources can be released for use by the deterministic services that produce the micro-burst.

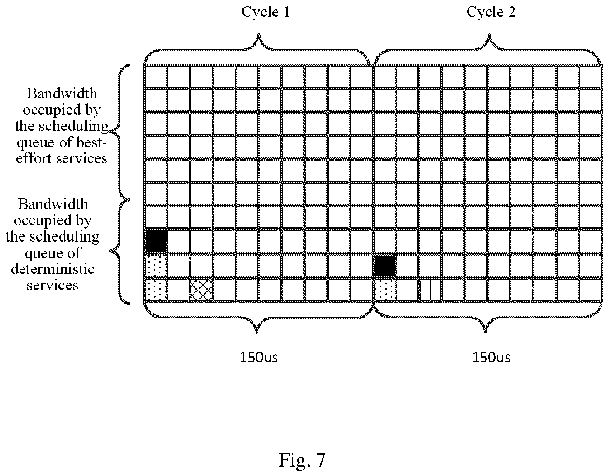

As an example and as shown in Fig. 7, filled grids in Fig. 7 indicate forwarding resources which are occupied. On the basis of Fig. 5, the reserved bandwidth resources indicated by the fourth grid from the bottom of the first time slot in cycle 1 are not occupied, so the reserved bandwidth resources are released. If the reserved bandwidth resources and spare bandwidth resources represented by the last two grids of the third time slot in cycle 1, and the spare bandwidth resources represented by the fourth grid from the bottom of the third time slot in cycle 1 in Fig. 5 are all not occupied, the unoccupied bandwidth resources are all released as can be seen from the third time slot in cycle 1 in Fig. 7.

Similarly, in Fig. 7, the spare bandwidth resources of the first time slot in cycle 2 are all released, and the reserved bandwidth resources and spare bandwidth resources for a deterministic service and the spare bandwidth resources for another deterministic service in the third time slot are all released. See Fig. 7 for the released resource occupation.

The released bandwidth resources can be used by other deterministic services, and if there are no other deterministic services, the released bandwidth resources can also be used by best-effort services, which can improve the resource utilization rate while improving the ability to deal with the micro-burst problem.

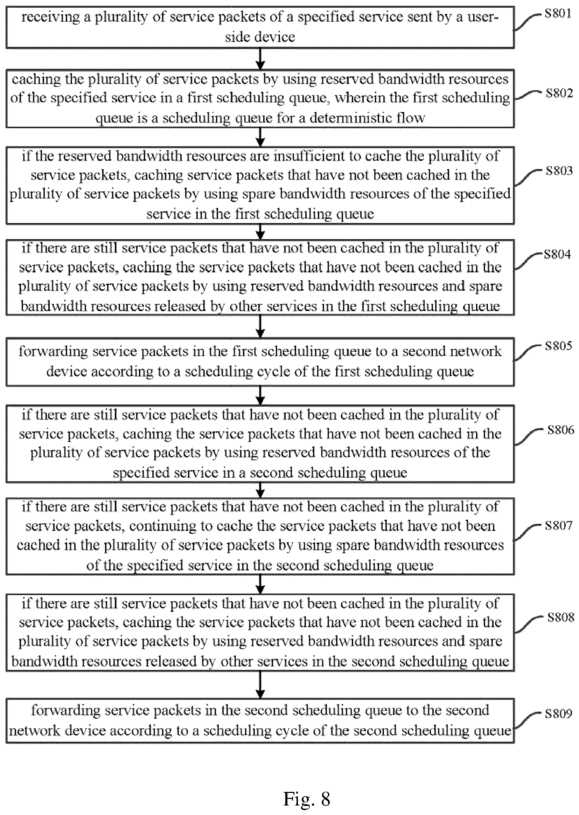

Correspondingly, service packets of the specified service can also occupy bandwidth resources released by other deterministic services. On the basis of the example corresponding to Fig. 3, the method includes S801-S809 as shown in Fig. 8.

S801-S803 are the same as S301-S303, and S804 can be continued after S803.

S804: if there are still service packets that have not been cached in the plurality of service packets, caching the service packets that have not been cached in the plurality of service packets by using reserved bandwidth resources and spare bandwidth resources released by other services in the first scheduling queue.

The other services in the first scheduling queue are also deterministic services.

After S804, S805 can be executed, and S805 is the same as S304. After S804 is executed, if there are still service packets that have not been cached, bandwidth resources in the second scheduling cycle can be continuously occupied, which can be specifically implemented as the following blocks S806-S809.

S806: if there are still service packets that have not been cached in the plurality of service packets, caching the service packets that have not been cached in the plurality of service packets by using reserved bandwidth resources of the specified service in a second scheduling queue.

The second scheduling queue is a scheduling queue for the deterministic flow, and scheduling cycles of the second scheduling queue and the first scheduling queue are continuous.

S807: if there are still service packets that have not been cached in the plurality of service packets, continuing to cache the service packets that have not been cached in the plurality of service packets by using spare bandwidth resources of the specified service in the second scheduling queue.

S808: if there are still service packets that have not been cached in the plurality of service packets, caching the service packets that have not been cached in the plurality of service packets by using reserved bandwidth resources and spare bandwidth resources released by other services in the second scheduling queue.

S809: forwarding service packets in the second scheduling queue to the second network device according to a scheduling cycle of the second scheduling queue.

In the above process, when the plurality of service packets are completely cached, there is no need to perform the subsequent caching steps, and only need to forward the service packets in the first scheduling queue and the second scheduling queue respectively according to the scheduling cycle of the first scheduling queue and the scheduling cycle of the second scheduling queue.

According to examples of the present disclosure, if a micro-burst occurs in the specified service, reserved bandwidth resources and spare bandwidth resources of the specified service and reserved bandwidth resources and spare bandwidth resources released by other services in the first scheduling queue, and reserved bandwidth resources and spare bandwidth resources of the specified service and reserved bandwidth resources and spare bandwidth resources released by other services in the second scheduling queue can all be used to cache the service packets of the specified service, which greatly reduces the packet loss rate caused by the micro-burst, improves the resource utilization rate of bandwidth resources, and can still satisfy the deterministic delay requirement of the specified service when forwarding the service packet within two scheduling cycles. It can be seen that examples of the present disclosure reduces the packet loss rate caused by the micro-burst on the basis of satisfying the deterministic delay of deterministic services.

On the basis of the above examples, if the micro-burst is serious, forwarding resources for non-deterministic services can be further utilized, that is, after S804 and before S806, the method further includes:
if there are still service packets that have not been cached in the plurality of service packets, caching the service packets that have not been cached in the plurality of service packets by occupying bandwidth resources in a third scheduling queue; and forwarding service packets in the third scheduling queue to the second network device according to a scheduling cycle of the third scheduling queue; wherein, the third scheduling queue is a scheduling queue for a non-deterministic flow, and a scheduling cycle of the third scheduling queue is the same as that of the first scheduling queue. For example, both the first scheduling queue and the third scheduling queue are cycle 1 in Fig. 5.

Optionally, if there are idle bandwidth resources in the third scheduling queue, the idle bandwidth resources will be occupied preferentially; if the idle bandwidth resources are insufficient to cache the service packets that have not been cached of the specified service, the occupied bandwidth resources in the third scheduling queue can be continuously occupied, so as to give priority to the forwarding of service packets of time-sensitive deterministic services.

It can be understood that if a plurality of service packets of the specified service all have been cached, there is no need to continue to execute S806, and if there are still service packets that have not been cached, the process continues to S806. After S808, if there are still service packets that have not been cached, bandwidth resources of the next scheduling cycle of the non-deterministic flow can continue to be occupied, which is specifically as follows:
if there are still service packets that have not been cached in the plurality of service packets, caching the service packets that have not been cached in the plurality of service packets by occupying bandwidth resources in a fourth scheduling queue; and forwarding service packets in the fourth scheduling queue to the second network device according to a scheduling cycle of the fourth scheduling queue, wherein, the fourth scheduling queue is a scheduling queue for a non-deterministic flow, and a scheduling cycle of the fourth scheduling queue is the same as that of the second scheduling queue. For example, both the second scheduling queue and the fourth scheduling queue are cycle 2 in Fig. 5.

Optionally, if there are idle bandwidth resources in the fourth scheduling queue, the idle bandwidth resources will be occupied preferentially; if the idle bandwidth resources are insufficient to cache the service packets that have not been cached of the specified service, the occupied bandwidth resources in the fourth scheduling queue can be continuously occupied, so as to give priority to the forwarding of service packets of time-sensitive deterministic services.

In an example of the present disclosure, bandwidth resources of the first scheduling queue account for less than or equal to 50% of the total bandwidth resources, and bandwidth resources of the second scheduling queue account for less than or equal to 50% of the total bandwidth resources. The total bandwidth resources refer to total bandwidth resources of the out-interface corresponding to the first scheduling queue. That is to say, bandwidth resources for the deterministic flows are less than or equal to 50% of the total bandwidth resources. In this way, in the case of serious micro-burst, bandwidth resources for the non-deterministic flows can still be occupied to process the service packets under the micro-burst, which significantly improves the caching capacity of the service packets under the micro-burst, ensures the delay and packet loss rate requirements of the deterministic services, and can improve the overall resource utilization rate.

In an example of the present disclosure, the proportion of bandwidth resources for the non-deterministic flows can be between 0% and (1 minus the proportion of bandwidth resources for the deterministic flows)%. The proportion of bandwidth resources for the non-deterministic flows can be determined according to a statistical average through long-term statistics of the proportion of bandwidth resources occupied by service packets of the non-deterministic flows in a single scheduling cycle. Specifically, if the sum of the statistical average and the proportion of bandwidth resources for the deterministic flows is less than or equal to 1, the statistical average can be used as the proportion of bandwidth resources for the non-deterministic flows; if the sum of the statistical average and the proportion of bandwidth resources for the deterministic flows is greater than 1 and does not exceed a preset threshold, the statistical average can also be used as the proportion of bandwidth resources for the non-deterministic flows; if the sum exceeds the preset threshold, the preset threshold is used as the statistical average and as the proportion of bandwidth resources for the non-deterministic flows. The bandwidth resources for the deterministic flows may not be completely occupied without micro-burst, and these bandwidth resources that are not completely occupied can also be used by non-deterministic services, so when the sum of the proportion of bandwidth resources for the non-deterministic flows and the proportion of bandwidth resources for the deterministic flows is greater than 1, service packets of the non-deterministic services can be forwarded in time in most cases, which can improve the resource utilization rate.

According to examples of the present disclosure, if an average bandwidth of the specified service is 100Mbps and an instantaneous bandwidth reaches 400Mbps in the case of micro-burst, the first network device can cache service packets of 400Mbps, thus reducing the packet loss rate caused by the micro-burst. In addition, the reserved bandwidth resources and spare bandwidth resources allocated for the specified service can be dynamically adjusted according to the packet loss rate. If the packet loss rate satisfies the packet loss rate requirement of the specified service, the allocated reserved bandwidth resources and spare bandwidth resources can be used; if the packet loss rate exceeds the packet loss rate requirement, the reserved bandwidth resources and spare bandwidth resources can be increased to ensure the delay and packet loss rate requirements of deterministic services.

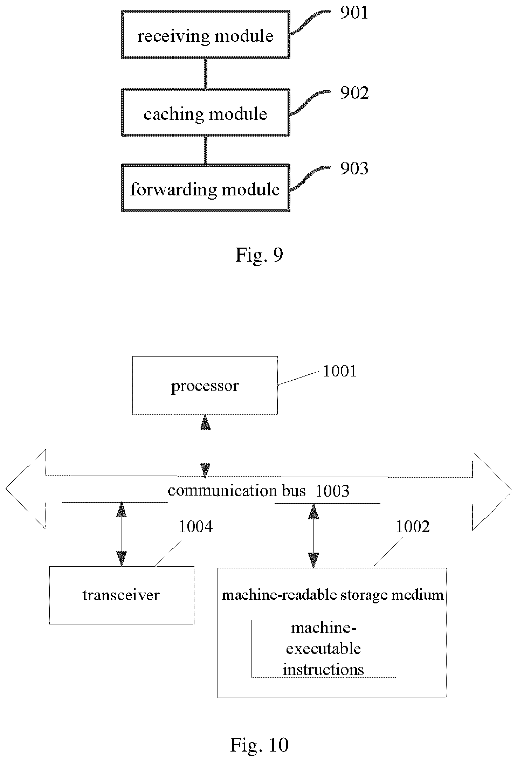

Corresponding to the above examples of the method, an example of the present disclosure also provides a packet processing apparatus, which is applied to a first network device. As shown in Fig. 9, the apparatus includes: a receiving module 901 to receive a plurality of service packets of a specified service sent by a user-side device; a caching module 902 to cache the plurality of service packets by using reserved bandwidth resources of the specified service in a first scheduling queue, wherein the first scheduling queue is a scheduling queue for a deterministic flow; the caching module 902 is further to cache service packets that have not been cached in the plurality of service packets by using spare bandwidth resources of the specified service in the first scheduling queue if the reserved bandwidth resources are insufficient to cache the plurality of service packets; a forwarding module 903 to forward service packets in the first scheduling queue to a second network device according to a scheduling cycle of the first scheduling queue.

Optionally, the caching module 902 is further to, after caching service packets that have not been cached in the plurality of service packets by using spare bandwidth resources of the specified service in the first scheduling queue, cache, if there are still service packets that have not been cached in the plurality of service packets, the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continue to cache the service packets that have not been cached in the plurality of service packets by using spare bandwidth resources of the specified service in the second scheduling queue; the forwarding module 903 is further to forward service packets in the second scheduling queue to the second network device according to a scheduling cycle of the second scheduling queue.

Optionally, the caching module 902 is further to, after caching the plurality of service packets by using reserved bandwidth resources of the specified service in a first scheduling queue, release, if the plurality of service packets have been cached, the spare bandwidth resources of the specified service in the first scheduling queue; the caching module 902 is further to, after caching the service packets that have not been cached in the plurality of service packets by using reserved bandwidth resources of the specified service in a second scheduling queue, release, if the plurality of service packets have been cached, the spare bandwidth resources of the specified service in the second scheduling queue.

Optionally, the caching module 902 is further to, after caching service packets that have not been cached in the plurality of service packets by using spare bandwidth resources of the specified service in the first scheduling queue, cache, if there are still service packets that have not been cached in the plurality of service packets, the service packets that have not been cached in the plurality of service packets by using reserved bandwidth resources and spare bandwidth resources released by other services in the first scheduling queue.

Optionally, the caching module 902 is further to, after caching the service packets that have not been cached in the plurality of service packets by using reserved bandwidth resources and spare bandwidth resources released by other services in the first scheduling queue, cache, if there are still service packets that have not been cached in the plurality of service packets, the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continue to cache the service packets that have not been cached in the plurality of service packets by using spare bandwidth resources of the specified service in the second scheduling queue; if there are still service packets that have not been cached in the plurality of service packets, cache the service packets that have not been cached in the plurality of service packets by using reserved bandwidth resources and spare bandwidth resources released by other services in the second scheduling queue; the forwarding module 903 is further to forward service packets in the second scheduling queue to the second network device according to a scheduling cycle of the second scheduling queue.

Optionally, the caching module 902 is further to before the caching the service packets that have not been cached in the plurality of service packets by using reserved bandwidth resources of the specified service in the second scheduling queue, cache, if there are still service packets that have not been cached in the plurality of service packets, the service packets that have not been cached in the plurality of service packets by occupying bandwidth resources in a third scheduling queue; wherein the third scheduling queue is a scheduling queue for a non-deterministic flow, and a scheduling cycle of the third scheduling queue is the same as that of the first scheduling queue; the forwarding module 903 is further to forward service packets in the third scheduling queue to the second network device according to the scheduling cycle of the third scheduling queue; the caching module 902 is further to, after caching the service packets that have not been cached in the plurality of service packets by using reserved bandwidth resources and spare bandwidth resources released by other services in the second scheduling queue, cache, if there are still service packets that have not been cached in the plurality of service packets, the service packets that have not been cached in the plurality of service packets by occupying bandwidth resources in a fourth scheduling queue; wherein the fourth scheduling queue is a scheduling queue for a non-deterministic flow, and a scheduling cycle of the fourth scheduling queue is the same as that of the second scheduling queue; the forwarding module 903 is further to forward service packets in the fourth scheduling queue to the second network device according to the scheduling cycle of the fourth scheduling queue.

Optionally, bandwidth resources of the first scheduling queue account for less than or equal to 50% of total bandwidth resources, and bandwidth resources of the second scheduling queue account for less than or equal to 50% of the total bandwidth resources.

Corresponding to the above examples of the method, an example of the disclosure also provides a network device. As shown in Fig. 10, the network device includes: a processor 1001; a transceiver 1004; a machine-readable storage medium 1002 storing machine-executable instructions that can be executed by the processor 1001; the machine-executable instructions cause the processor 1001 to: receive a plurality of service packets of a specified service sent by a user-side device; cache the plurality of service packets by using reserved bandwidth resources of the specified service in a first scheduling queue, wherein the first scheduling queue is a scheduling queue for the deterministic flow; if the reserved bandwidth resources are insufficient to cache the plurality of service packets, cache service packets that have not been cached in the plurality of service packets by using spare bandwidth resources of the specified service in the first scheduling queue; forward, by the transceiver 1004, service packets in the first scheduling queue to a second network device according to a scheduling cycle of the first scheduling queue.

Optionally, the machine-executable instructions further cause the processor 1001 to: after caching service packets that have not been cached in the plurality of service packets by using spare bandwidth resources of the specified service in the first scheduling queue, cache, if there are still service packets that have not been cached in the plurality of service packets, the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continue to cache the service packets that have not been cached in the plurality of service packets by using spare bandwidth resources of the specified service in the second scheduling queue; forward, by the transceiver 1004, service packets in the second scheduling queue to the second network device according to a scheduling cycle of the second scheduling queue.

Optionally, the machine-executable instructions further cause the processor 1001 to: after caching the plurality of service packets by using reserved bandwidth resources of the specified service in a first scheduling queue, release, if the plurality of service packets have been cached, spare bandwidth resources of the specified service in the first scheduling queue; after caching the service packets that have not been cached in the plurality of service packets by using reserved bandwidth resources of the specified service in a second scheduling queue, release, if the plurality of service packets have been cached, spare bandwidth resources of the specified service in the second scheduling queue.

Optionally, the machine-executable instructions further cause the processor 1001 to: after caching service packets that have not been cached in the plurality of service packets by using spare bandwidth resources of the specified service in the first scheduling queue, cache, if there are still service packets that have not been cached in the plurality of service packets, the service packets that have not been cached in the plurality of service packets by using reserved bandwidth resources and spare bandwidth resources released by other services in the first scheduling queue.

Optionally, the machine-executable instructions further cause the processor 1001 to: after caching the service packets that have not been cached in the plurality of service packets by using reserved bandwidth resources and spare bandwidth resources released by other services in the first scheduling queue, cache, if there are still service packets that have not been cached in the plurality of service packets, the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continue to cache the service packets that have not been cached in the plurality of service packets by using spare bandwidth resources of the specified service in the second scheduling queue; if there are still service packets that have not been cached in the plurality of service packets, cache the service packets that have not been cached in the plurality of service packets by using reserved bandwidth resources and spare bandwidth resources released by other services in the second scheduling queue; forward, by the transceiver 1004, service packets in the second scheduling queue to the second network device according to a scheduling cycle of the second scheduling queue.

Optionally, the machine-executable instructions further cause the processor 1001 to: before the caching the service packets that have not been cached in the plurality of service packets by using reserved bandwidth resources of the specified service in the second scheduling queue, cache, if there are still service packets that have not been cached in the plurality of service packets, the service packets that have not been cached in the plurality of service packets by occupying bandwidth resources in a third scheduling queue, wherein the third scheduling queue is a scheduling queue for a non-deterministic flow, and a scheduling cycle of the third scheduling queue is the same as that of the first scheduling queue; forward, by the transceiver 1004, service packets in the third scheduling queue to the second network device according to the scheduling cycle of the third scheduling queue; after caching the service packets that have not been cached in the plurality of service packets by using reserved bandwidth resources and spare bandwidth resources released by other services in the second scheduling queue, cache, if there are still service packets that have not been cached in the plurality of service packets, the service packets that have not been cached in the plurality of service packets by occupying bandwidth resources in a fourth scheduling queue, wherein the fourth scheduling queue is a scheduling queue for a non-deterministic flow, and a scheduling cycle of the fourth scheduling queue is the same as that of the second scheduling queue; forward, by the transceiver 1004, service packets in the fourth scheduling queue to the second network device according to the scheduling cycle of the fourth scheduling queue.

Optionally, the proportion of bandwidth resources of the first scheduling queue is less than or equal to 50%, and the proportion of bandwidth resources of the second scheduling queue is less than or equal to 50%.

As shown in Fig. 10, the network device may further include a communication bus 1003. The processor 1001, the machine-readable storage medium 1002 and the transceiver 1004 communicate with each other through the communication bus 1003, which can be a Peripheral Component Interconnect (PCI) bus or an Extended Industry Standard Architecture (EISA) bus, etc. The communication bus 1003 can be divided into an address bus, a data bus, a control bus, etc. The transceiver 1004 can be a wireless communication module, and the transceiver 1004 performs data interaction with other devices under the control of the processor 1001.

The machine-readable storage medium 1002 may include Random Access Memory (RAM) or Non-Volatile Memory (NVM), such as at least one disk memory. In addition, the machine-readable storage medium 1002 can also be at least one storage device located far away from the above processor.

The processor 1001 may be a general-purpose processor, including a Central Processing Unit (CPU) and a Network Processor (NP), etc., and may also be a Digital Signal Processing (DSP), an Application Specific Integrated Circuit (ASIC), a Field-Programmable Gate Array (FPGA) or other programmable logic devices, discrete gate or transistor logic devices, and discrete hardware components.

Based on the same inventive concept, according to the packet processing method provided by an example of the present disclosure, the example of the present disclosure also provides a machine-readable storage medium storing machine-executable instructions that can be executed by the processor. The machine executable instructions cause a processor to carry out any of the above packet processing methods.

In yet another example provided by the present disclosure, a computer program product containing instructions is also provided., the instructions, when running on a computer, cause the computer to carry our any packet processing method in the above examples.

In the above examples, it may be implemented in whole or in part by software, hardware, firmware or any combination thereof. When implemented in software, it can be implemented in whole or in part in the form of a computer procedure product. The computer procedure product includes one or more computer instructions. When the computer procedure instructions are loaded and executed on a computer, the processes or functions described in the examples of the present disclosure are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available media. The usable media may be magnetic media (such as a floppy disk, a hard disk, a magnetic tape), optical media (such as DVD), or semiconductor media (such as Solid State Disk (SSD)) and the like.

It should be noted that, relational terms such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or apparatus. Without further limitation, elements defined by the phrase "comprising one..." do not preclude the presence of additional identical elements in a process, method, article or device that includes the mentioned elements.

The various examples in this specification are described in a related manner. Each example focuses on the differences from other examples, and the same and similar parts between the various examples can be referred to each other. Especially, for the example of the device, the description is relatively simple because it is basically similar to the example of the method, and the relevant points can be referred to the partial description of the example of the method.

The above is only the preferred embodiments of the present application, and they are not used to limit the present application. The above descriptions are only preferred examples of the disclosure, and are not intended to limit the disclosure. Any modifications, equivalent replacements, improvements and the like made within the spirit and principles of the disclosure shall be included within the scope of protection of the disclosure.

## Claims

1. A packet processing method, which is applied to a first network device, the method comprising:
receiving a plurality of service packets of a specified service sent by a user-side device;
caching the plurality of service packets by using reserved bandwidth resources of the specified service in a first scheduling queue, wherein the first scheduling queue is a scheduling queue for a deterministic flow;
if the reserved bandwidth resources are insufficient to cache the plurality of service packets, caching service packets that have not been cached in the plurality of service packets by using spare bandwidth resources of the specified service in the first scheduling queue; and
forwarding service packets in the first scheduling queue to a second network device according to a scheduling cycle of the first scheduling queue.

2. The method according to claim 1, wherein after caching the service packets that have not been cached in the plurality of service packets by using the spare bandwidth resources of the specified service in the first scheduling queue, the method further comprises:
if there are still service packets that have not been cached in the plurality of service packets, caching the service packets that have not been cached in the plurality of service packets by using reserved bandwidth resources of the specified service in a second scheduling queue; wherein the second scheduling queue is a scheduling queue for the deterministic flow, and scheduling cycles of the second scheduling queue and the first scheduling queue are continuous;
if there are still service packets that have not been cached in the plurality of service packets, continuing to cache the service packets that have not been cached in the plurality of service packets by using spare bandwidth resources of the specified service in the second scheduling queue; and
forwarding service packets in the second scheduling queue to the second network device according to the scheduling cycle of the second scheduling queue.

3. The method according to claim 2, wherein after caching the plurality of service packets by using the reserved bandwidth resources of the specified service in the first scheduling queue, the method further comprises:
if the plurality of service packets have been cached, releasing the spare bandwidth resources of the specified service in the first scheduling queue;
wherein after caching the service packets that have not been cached in the plurality of service packets by using the reserved bandwidth resources of the specified service in the second scheduling queue, the method further comprises:
if the plurality of service packets have been cached, releasing the spare bandwidth resources of the specified service in the second scheduling queue.

4. The method according to claim 1, wherein after caching the service packets that have not been cached in the plurality of service packets by using the spare bandwidth resources of the specified service in the first scheduling queue, the method further comprises:
if there are still service packets that have not been cached in the plurality of service packets, caching the service packets that have not been cached in the plurality of service packets by using reserved bandwidth resources and spare bandwidth resources released by other services in the first scheduling queue.

5. The method according to claim 4, wherein after caching the service packets that have not been cached in the plurality of service packets by using the reserved bandwidth resources and spare bandwidth resources released by other services in the first scheduling queue, the method further comprises:
if there are still service packets that have not been cached in the plurality of service packets, caching the service packets that have not been cached in the plurality of service packets by using reserved bandwidth resources of the specified service in a second scheduling queue; wherein the second scheduling queue is a scheduling queue for the deterministic flow, and scheduling cycles of the second scheduling queue and the first scheduling queue are continuous;
if there are still service packets that have not been cached in the plurality of service packets, continuing to cache the service packets that have not been cached in the plurality of service packets by using spare bandwidth resources of the specified service in the second scheduling queue;
if there are still service packets that have not been cached in the plurality of service packets, caching the service packets that have not been cached in the plurality of service packets by using reserved bandwidth resources and spare bandwidth resources released by other services in the second scheduling queue; and
forwarding service packets in the second scheduling queue to the second network device according to the scheduling cycle of the second scheduling queue.

6. The method according to claim 5, wherein before caching the service packets that have not been cached in the plurality of service packets by using the reserved bandwidth resources of the specified service in the second scheduling queue, the method further comprises:
if there are still service packets that have not been cached in the plurality of service packets, caching the service packets that have not been cached in the plurality of service packets by occupying bandwidth resources in a third scheduling queue; wherein the third scheduling queue is a scheduling queue for a non-deterministic flow, and a scheduling cycle of the third scheduling queue is the same as that of the first scheduling queue; and
forwarding service packets in the third scheduling queue to the second network device according to the scheduling cycle of the third scheduling queue;
wherein after caching the service packets that have not been cached in the plurality of service packets by using the reserved bandwidth resources and spare bandwidth resources released by other services in the second scheduling queue, the method further comprises:
if there are still service packets that have not been cached in the plurality of service packets, caching the service packets that have not been cached in the plurality of service packets by occupying bandwidth resources in a fourth scheduling queue; wherein the fourth scheduling queue is a scheduling queue for the non-deterministic flow, and a scheduling cycle of the fourth scheduling queue is the same as that of the second scheduling queue; and
forwarding service packets in the fourth scheduling queue to the second network device according to the scheduling cycle of the fourth scheduling queue.

7. The method according to claim 6, wherein bandwidth resources of the first scheduling queue account for less than or equal to 50% of total bandwidth resources, and bandwidth resources of the second scheduling queue account for less than or equal to 50% of the total bandwidth resources.

8. A packet processing apparatus, which is applied to a first network device, the apparatus comprising:
a receiving module to receive a plurality of service packets of a specified service sent by a user-side device;
a caching module to cache the plurality of service packets by using reserved bandwidth resources of the specified service in a first scheduling queue, wherein the first scheduling queue is a scheduling queue for a deterministic flow;
wherein the caching module is further to cache, if the reserved bandwidth resources are insufficient to cache the plurality of service packets, service packets that have not been cached in the plurality of service packets by using spare bandwidth resources of the specified service in the first scheduling queue; and
a forwarding module to forward service packets in the first scheduling queue to a second network device according to a scheduling cycle of the first scheduling queue.

9. The apparatus according to claim 8, wherein,
the caching module is further to: after caching the service packets that have not been cached in the plurality of service packets by using the spare bandwidth resources of the specified service in the first scheduling queue, cache, if there are still service packets that have not been cached in the plurality of service packets, the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continue to cache the service packets that have not been cached in the plurality of service packets by using spare bandwidth resources of the specified service in the second scheduling queue;
the forwarding module is further to forward service packets in the second scheduling queue to the second network device according to the scheduling cycle of the second scheduling queue.

10. The apparatus according to claim 9, wherein,
the caching module is further to, after caching the plurality of service packets by using the reserved bandwidth resources of the specified service in the first scheduling queue, release, if the plurality of service packets have been cached, the spare bandwidth resources of the specified service in the first scheduling queue;
the caching module is further to, after caching the service packets that have not been cached in the plurality of service packets by using the reserved bandwidth resources of the specified service in the second scheduling queue, release, if the plurality of service packets have been cached, the spare bandwidth resources of the specified service in the second scheduling queue.

11. The apparatus according to claim 8, wherein,
the caching module is further to, after caching service packets that have not been cached in the plurality of service packets by using the spare bandwidth resources of the specified service in the first scheduling queue, cache, if there are still service packets that have not been cached in the plurality of service packets, the service packets that have not been cached in the plurality of service packets by using reserved bandwidth resources and spare bandwidth resources released by other services in the first scheduling queue.

12. The apparatus according to claim 11, wherein,
the caching module is further to: after caching the service packets that have not been cached in the plurality of service packets by using the reserved bandwidth resources and spare bandwidth resources released by other services in the first scheduling queue, cache, if there are still service packets that have not been cached in the plurality of service packets, the service packets that have not been cached in the plurality of service packets by using reserved bandwidth resources of the specified service in a second scheduling queue, wherein the second scheduling queue is a scheduling queue for the deterministic flow, and scheduling cycles of the second scheduling queue and the first scheduling queue are continuous; if there are still service packets that have not been cached in the plurality of service packets, continue to cache the service packets that have not been cached in the plurality of service packets by using spare bandwidth resources of the specified service in the second scheduling queue; if there are still service packets that have not been cached in the plurality of service packets, cache the service packets that have not been cached in the plurality of service packets by using reserved bandwidth resources and spare bandwidth resources released by other services in the second scheduling queue;
the forwarding module is further to forward service packets in the second scheduling queue to the second network device according to the scheduling cycle of the second scheduling queue.

13. The apparatus according to claim 12, wherein,
the caching module is further to, before caching the service packets that have not been cached in the plurality of service packets by using the reserved bandwidth resources of the specified service in the second scheduling queue, cache, if there are still service packets that have not been cached in the plurality of service packets, the service packets that have not been cached in the plurality of service packets by occupying bandwidth resources in a third scheduling queue; wherein the third scheduling queue is a scheduling queue for a non-deterministic flow, and a scheduling cycle of the third scheduling queue is the same as that of the first scheduling queue;
the forwarding module is further to forward service packets in the third scheduling queue to the second network device according to the scheduling cycle of the third scheduling queue;
the caching module is further to, after caching the service packets that have not been cached in the plurality of service packets by using the reserved bandwidth resources and spare bandwidth resources released by other services in the second scheduling queue, cache, if there are still service packets that have not been cached in the plurality of service packets, the service packets that have not been cached in the plurality of service packets by occupying bandwidth resources in a fourth scheduling queue; wherein the fourth scheduling queue is a scheduling queue for the non-deterministic flow, and a scheduling cycle of the fourth scheduling queue is the same as that of the second scheduling queue;
the forwarding module is further to forward service packets in the fourth scheduling queue to the second network device according to the scheduling cycle of the fourth scheduling queue.

14. The apparatus according to claim 13, wherein bandwidth resources of the first scheduling queue account for less than or equal to 50% of total bandwidth resources, and bandwidth resources of the second scheduling queue account for less than or equal to 50% of the total bandwidth resources.

15. A network device comprising:
a processor;
a transceiver; and
a machine-readable storage medium having machine-executable instructions stored therein that can be executed by the processor; the machine-executable instructions cause the processor to:
receive a plurality of service packets of a specified service sent by a user-side device;
cache the plurality of service packets by using reserved bandwidth resources of the specified service in a first scheduling queue, wherein the first scheduling queue is a scheduling queue for a deterministic flow;
if the reserved bandwidth resources are insufficient to cache the plurality of service packets, cache service packets that have not been cached in the plurality of service packets by using spare bandwidth resources of the specified service in the first scheduling queue; and
forwarding, by the transceiver, service packets in the first scheduling queue to a second network device according to a scheduling cycle of the first scheduling queue.

16. The network device of claim 15, wherein the machine-executable instructions further cause the processor to:
after caching the service packets that have not been cached in the plurality of service packets by using the spare bandwidth resources of the specified service in the first scheduling queue, cache, if there are still service packets that have not been cached in the plurality of service packets, the service packets that have not been cached in the plurality of service packets by using reserved bandwidth resources of the specified service in a second scheduling queue; wherein the second scheduling queue is a scheduling queue for the deterministic flow, and scheduling cycles of the second scheduling queue and the first scheduling queue are continuous;
if there are still service packets that have not been cached in the plurality of service packets, continue to cache the service packets that have not been cached in the plurality of service packets by using spare bandwidth resources of the specified service in the second scheduling queue; and
forward, by the transceiver, service packets in the second scheduling queue to the second network device according to the scheduling cycle of the second scheduling queue.

17. The network device of claim 16, wherein the machine-executable instructions further cause the processor to:
after caching the plurality of service packets by using the reserved bandwidth resources of the specified service in the first scheduling queue, release, if the plurality of service packets have been cached, the spare bandwidth resources of the specified service in the first scheduling queue; and
after caching the service packets that have not been cached in the plurality of service packets by using the reserved bandwidth resources of the specified service in the second scheduling queue, release, if the plurality of service packets have been cached, the spare bandwidth resources of the specified service in the second scheduling queue.

18. The network device of claim 15, wherein the machine-executable instructions further cause the processor to:
after caching service packets that have not been cached in the plurality of service packets by using the spare bandwidth resources of the specified service in the first scheduling queue, cache, if there are still service packets that have not been cached in the plurality of service packets, the service packets that have not been cached in the plurality of service packets by using reserved bandwidth resources and spare bandwidth resources released by other services in the first scheduling queue.

19. The network device of claim 18, wherein the machine-executable instructions further cause the processor to:
after caching the service packets that have not been cached in the plurality of service packets by using the reserved bandwidth resources and spare bandwidth resources released by other services in the first scheduling queue, cache, if there are still service packets that have not been cached in the plurality of service packets, the service packets that have not been cached in the plurality of service packets by using reserved bandwidth resources of the specified service in a second scheduling queue; wherein the second scheduling queue is a scheduling queue for the deterministic flow, and scheduling cycles of the second scheduling queue and the first scheduling queue are continuous;
if there are still service packets that have not been cached in the plurality of service packets, continue to cache the service packets that have not been cached in the plurality of service packets by using spare bandwidth resources of the specified service in the second scheduling queue;
if there are still service packets that have not been cached in the plurality of service packets, cache the service packets that have not been cached in the plurality of service packets by using reserved bandwidth resources and spare bandwidth resources released by other services in the second scheduling queue; and
forward, by the transceiver, service packets in the second scheduling queue to the second network device according to the scheduling cycle of the second scheduling queue.

20. The network device of claim 19, wherein the machine-executable instructions further cause the processor to:
before caching the service packets that have not been cached in the plurality of service packets by using the reserved bandwidth resources of the specified service in the second scheduling queue, cache, if there are still service packets that have not been cached in the plurality of service packets, the service packets that have not been cached in the plurality of service packets by occupying bandwidth resources in a third scheduling queue; wherein the third scheduling queue is a scheduling queue for a non-deterministic flow, and a scheduling cycle of the third scheduling queue is the same as that of the first scheduling queue;
forward, by the transceiver, service packets in the third scheduling queue to the second network device according to the scheduling cycle of the third scheduling queue;
after caching the service packets that have not been cached in the plurality of service packets by using the reserved bandwidth resources and spare bandwidth resources released by other services in the second scheduling queue, cache, if there are still service packets that have not been cached in the plurality of service packets, the service packets that have not been cached in the plurality of service packets by occupying bandwidth resources in a fourth scheduling queue; wherein the fourth scheduling queue is a scheduling queue for the non-deterministic flow, and a scheduling cycle of the fourth scheduling queue is the same as that of the second scheduling queue; and
forward, by the transceiver, service packets in the fourth scheduling queue to the second network device according to the scheduling cycle of the fourth scheduling queue.

21. The network device according to claim 20, wherein bandwidth resources of the first scheduling queue account for less than or equal to 50% of total bandwidth resources, and bandwidth resources of the second scheduling queue account for less than or equal to 50% of the total bandwidth resources.

22. A machine-readable storage medium having stored therein machine-executable instructions which, when called and executed by a processor, cause the processor to carry out the method according to any one of claims 1 to 7.

23. A computer program product, which causes a processor to carry out the method according to any one of claims 1 to 7.
